# EUROPÄISCHE PATENTSCHRIFT

(11) **EP 0 628 452 B1**
(45) Veröffentlichungstag und Bekanntmachung des Hinweises auf die Patenterteilung: **24.07.1996**
(21) Anmeldenummer: 94107249.8
(22) Anmeldetag: 09.05.1994
(51) Int. Cl.: B60R 9/04

(54) **Dachlastträger mit mehrteiligen Stützfüssen**
Roof carrier stanchions composed of several parts
Galerie de toit avec pieds de support à plusieurs parties

(30) Priorität: 11.05.1993 DE 4315688
(43) Veröffentlichungstag der Anmeldung: 14.12.1994
(73) Patentinhaber: YMOS AKTIENGESELLSCHAFT Industrieprodukte, D-63179 Obertshausen (DE)
(72) Erfinder: Seliger, Tillmann, Dipl.-Ing., D-63065 Offenbach (DE)
(74) Vertreter: Schieferdecker, Lutz, Dipl.-Ing.

(56) Entgegenhaltungen:
- DE-A- 3 230 346
- DE-A- 3 539 449

## Beschreibung

Die Erfindung betrifft einen Dachlastträger mit mehrteiligen Stützfüßen und mit mindestens einem Trageelement, wobei die Stützfüße aus je mindestens einem Stützfuß-INnenteil und einem Verkleidungsteil bestehen und ferner das jeweilige Stützfuß-Innenteil mit Befestigungselementen zum Befestigen am Dach eines Kraftfahrzeuges versehen ist.

Aus der DE- 32 3o 346 A1 ist ein Dachlastträger bzw. ein Tragkörper zum Abstützen einer Dachreling am zugehörigen Fahrzeugdach bekannt. Dieser Tragkörper oder Stützfuß umfaßt zwei Tragkörperteile, von denen mindestens einer innen liegende Aussparungen aufweist. Alle Aussparung sind zur gleichen Seite hin offen, wobei diese offene Seite durch den jeweils anderen Tragkörperteil abgedeckt wird.

Außerdem weist der Tragkörper eine durch Umspritzen mit Kunststoff hergestellte Ummantelung auf.

Nachteilig ist bei diesen, für eine Dachreling bestimmten Tragkörper bzw. Stützfuß, daß sich eine Fügefläche über seine gesamte Länge erstreckt. Der Werkstoff ist im Bereich derartiger Fügeflächen besonders spröde, so daß dort die Aufnahme von betriebsbedingten Beanspruchungen zu Problemen führen kann. Darüberhinaus erfüllen Fügeflächen auch nicht die Anforderungen an ein derartiges Teil in ästhetischer Hinsicht, so lange die Stoßnahme sichtbar bleibt. Aber auch bei einer Ummantelung mit einer aus Kunststoff bestehenden Lage zwecks Bildung eines Verkleidungsteiles ergibt sich nur ein unbefriedigendes Aussehen. Durch den notwendigerweise hohen Spritzdruck kommt es nämlich zu einem Einfedern im Bereich der nicht von Zwischenwänden gestützten Aussparungen. Auch besteht die Gefahr, daß die Außenflächen beim Endformen partiell ausbeulen mit der Folge, daß der Tragkörper/Stützfuß unansehnlich ist.

Der Erfindung liegt daher die Aufgabe zugrunde, einen Dachlastträger mit Stützfüßen zu schaffen, wobei sich die Stützfüße durch hohe Steifigkeit und Festigkeit bei geringem Gewicht und niedrigen Herstellungskosten auszeichnen und dennoch gleichzeitig ansprechend aussehen.

Diese Aufgabe wird erfindungsgemäß dadurch gelöst, daß das Stützfuß-Innenteil ein tragendes Mittelteil umfasst und daß versteifende Vorsprünge außen auf dem tragenden Mittelteil angeordnet sind.

Das Stützfuß-Innenteil ist jeweils als tragendes Mittelteil vorgesehen und ist daher in der Lage, auftretende Kräfte gleichmäßig aufzunehmen und über die Befestigungselemente in das Dach des Kraftfahrzeuges weiterzuleiten. Es ist ferner von mindestens einem schalenförmigen oder plattenförmigen Außen- oder Verkleidungsteil ummantelt, das ein gesondert gefertigter, das Stützfuß-Innenteil formschlüssig umgebender Körper ist. Bei hoher Festigkeit und Steifigkeit können daher auch keine Beeinträchtigungen auftreten, die sich auf das Aussehen ungünstig auswirken.

In Weiterbildung der Erfindung ist vorgesehen, daß die versteifenden Vorsprünge beidseitig außen auf dem tragenden Mittelteil angeordnet sind.

Ferner wird zur weiteren Erhöhung der Festigkeit und Steifigkeit erfindungsgemäß vorgeschlagen, daß das Mitteilteil eines sich zumindest über einen Teil seiner Länge erstreckende Hohlkammer aufweist. Diese Hohlkammer besitzt vorzugsweise einen runden Querschnitt und kann vorzugsweise auch mit mindestens einem metallischen Versteifungselement versehen sein. Weitere Merkmale der Erfindung gehen aus Unteransprüchen in Verbindung mit der Beschreibung und der Zeichnung hervor.

Die Erfindung wird nachstehend anhand von Ausführungsbeispielen, die in der Zeichnung dargestellt sind, näher beschrieben. Dabei zeigen:
- Fig. 1:: einen abgebrochenen Schnitt durch einen Dachlastträger;
- Fig. 2:: einen Schnitt längs der Linie II-II in Fig.1;
- Fig. 3:: einen Schnitt längs der Linie III-III in Fig. 1;
- Fig. 4:: einen Schnitt längs der Linie IV-IV in Fig. 1;
- Fig. 5:: einen Schnitt wie in Fig. 1 durch ein abgewandeltes Ausführungsbeispiel;
- Fig. 6:: einen Schnitt längs der Linie VI-VI in Fig. 5;
- Fig. 7:: einen Schnitt wie in den Figuren 1 und 5 durch eine drittes Ausführungsbeispiel;
- Fig. 8:: einen Schnitt längs der Linie VIII-VIII in Fig. 7;
- Fig. 9:: einen Schnitt wie in den Figuren 1, 5, und 7 durch ein viertes Ausführungsbeispiel;
- Fig.10:: einen Schnitt wie in Fig. 7 durch ein letztes Ausführungsbeispiel und
- Fig.11:: einen Schnitt längs der Linie XI-XI in Fig. 10.

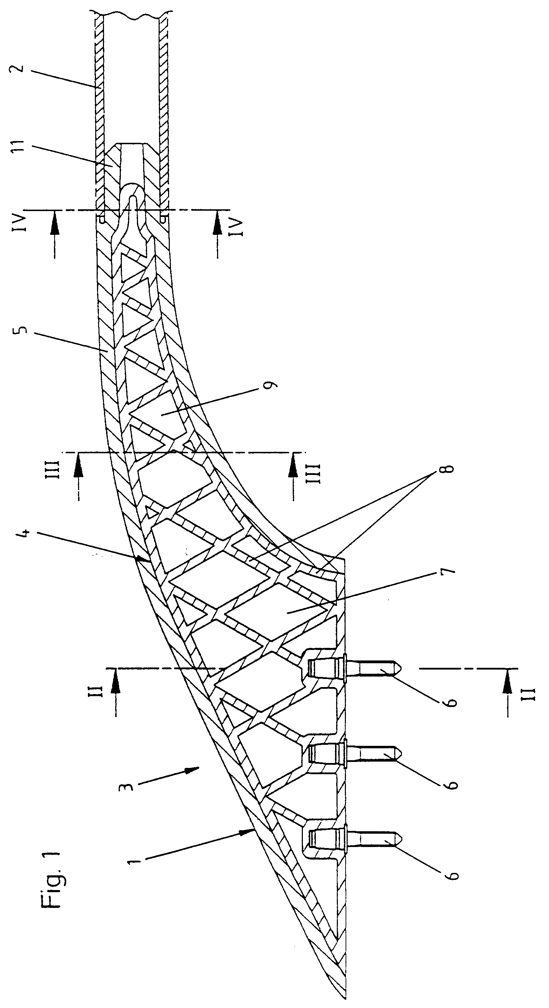

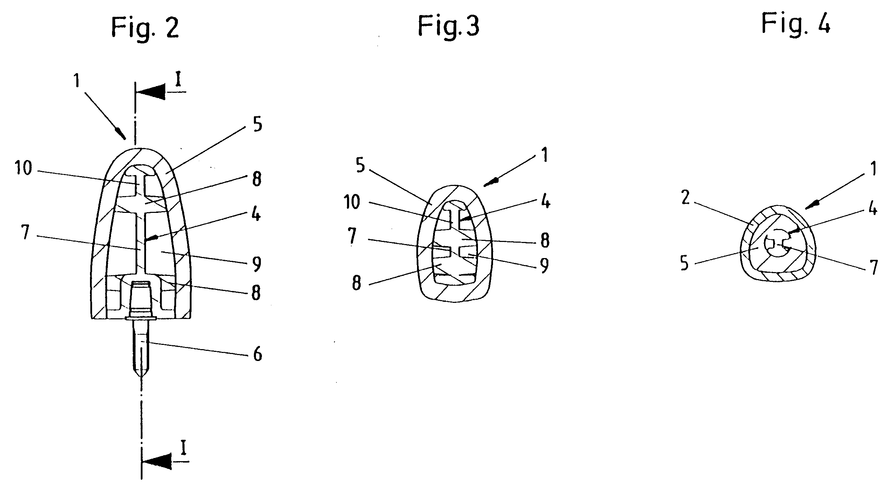

Ein mehrteiliger Stützfuß 1 für einen am Dach eines Kraftfahrzeuges zu befestigenden, mindestens ein Trageelement 2 aufweisenden Dachlastträger 3 umfasst ein Stützfuß-Innenteil 4 und ein Verkleidungsteil 5 sowie Befestigungselemente 6. Das Stützfuß-Innenteil 4 besteht bei dem in den Figuren 1 - 4 dargestellten Ausführungsbeispiel aus einem tragenden Mittelteil 7 und aus versteifenden Vorsprüngen 8, die außen auf dem Mittelteil 7 angeordnet sind. Die Vorsprünge 8 erstrecken sich längs der Kontur des Stützfuß-Innenteiles 4 und sind ferner beidseitig aussen am Mittelteil 7 fachwerkartig und/oder wabenartig angeordnet, wie ebenfalls Fig. 1 in Verbindung mit den Figuren 2 - 4 zeigt. Zwischen den rippenartigen Vorsprüngen 8 befinden sich jeweils offene Ausnehmungen bzw. Kammern 9.

Das tragende Mittelteil 7 ist plattenförmig bzw. es ist ein Wandelement und besteht letztlich aus mehreren, einstückig zusammenhängenden, stegförmigen Teilen 1o.

Die Herstellung des Stützfuß-Innenteiles 4 mit seinem Mittelteil 7 erfolgt zweckmäßigerweise aus einem hochsteifen, glasfaserverstärkten Kunststoff oder aus Metallguß.

Das Verkleidungsteil 5 ist eine Außenschale, die zweckmäßigerweise ebenfalls eine tragende Funktion besitzt und dazu ein Körper aus einem hochsteifen, glasfaserverstärkten Kunststoff ist. Zur Erhöhung der Festigkeit und Steifigkeit des Verkleidungsteiles ist dieses zweckmäßigerweise dickwandig. Die Befestigung des Verkleidungsteiles 5 am Stützfuß-Innenteil 4 erfolgt durch Verkleben oder Verschweißen bzw. mit Hilfe mechanischer Mittel.

Das freie Ende 11 des Verkleidungsteiles 5 übergreift gemäß Fig. 1 das Stützfußinnenteil 4. Das Trageelement 2 läßt sich in diesem Falle zweckmäßigerweise auf das freie Ende 11 aufstecken.

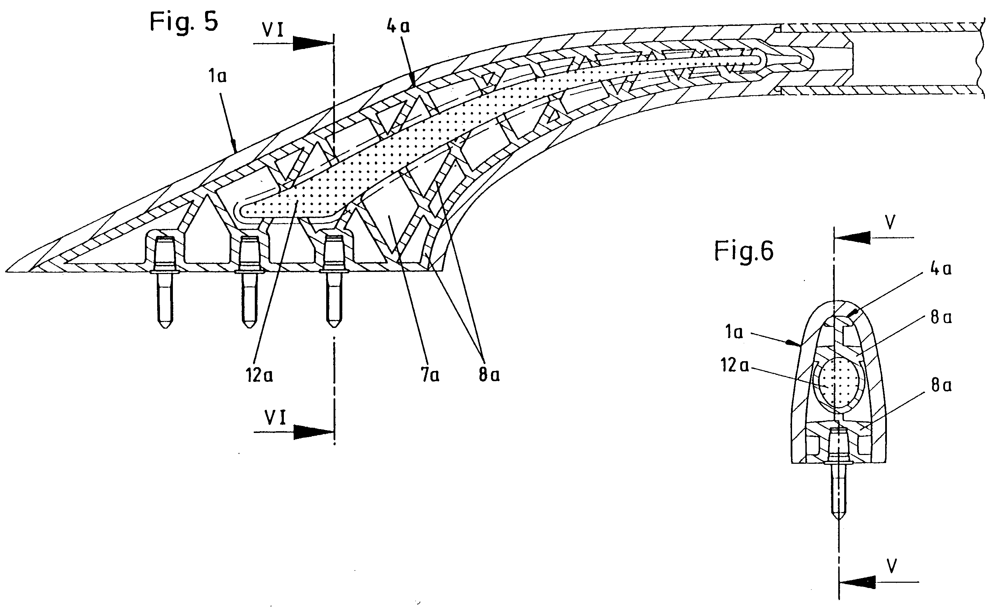

Ein gegenüber dem Stützfuß 1 abgewandeltes Ausführungsbeispiel ist in den Figuren 5 und 6 dargestellt. Gleiche Teile sind dort mit denselben Bezugszahlen, jedoch mit dem Buchstabenindex a bezeichnet.

Das Stützfuß- Innenteil 4a des Stützfußes 1a weist ein Mittelteil 7a mit einer Hohlkammer 12a auf. Die Hohlkammer 12a dient zur Versteifung und erstreckt sich über einen Teil der Länge des Mittelteiles 7a. Die Hohlkammer 12a besitzt einen runden Querschnitt und ist zusätzlich zu den rippenförmigen Vorsprüngen 8a vorgesehen.

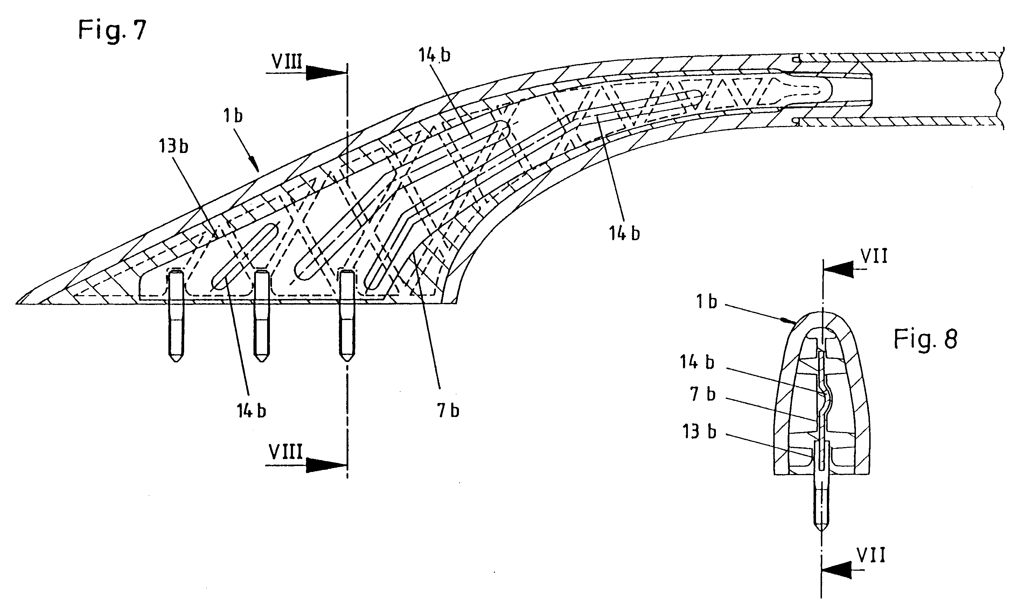

Ein drittes Ausführungsbeispiel ist in den Figuren 7 und 8 dargestellt, wobei wiederum dieselben Bezugszahlen gleiche Teile, hier jedoch mit dem Bustabenindex b bezeichnen.

Das als mittig angeordnetes Wandelement vorgesehene Mittelteil 7b des Stützfußes 1b weist mindestens ein metallisches Versteifungselement 13b zusätzlich auf. Dieses Versteifungselement 13b ist plattenförmig. Ferner kann es eine oder mehrere Versteifungssicken 14b aufweisen.

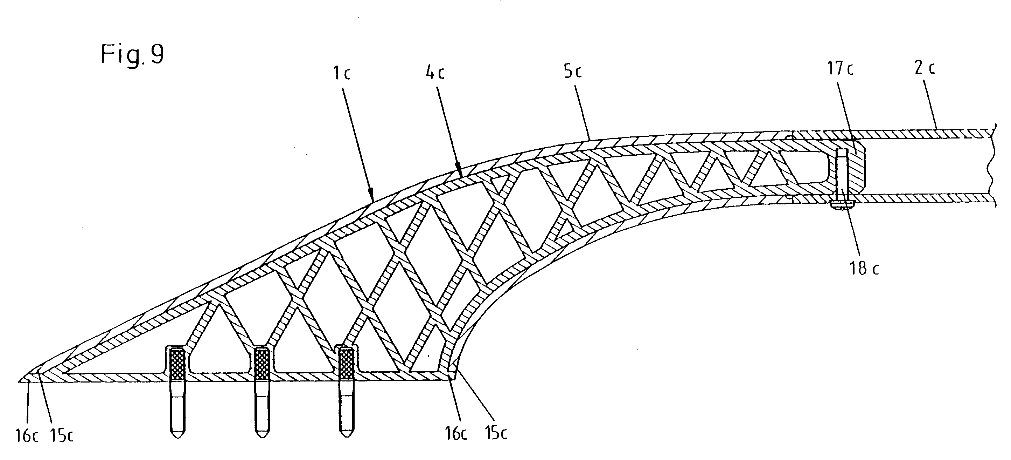

Fig. 9 zeigt ein viertes Ausführungsbeispiel, wobei für gleiche Teile wiederum dieselben Bezugszahlen zusätzlich mit dem Buchstabenindex c verwendet sind.

Der Stützfuß 1c gemäß Fig. 9 stimmt im wesentlichen mit dem Stützfuß 1 gemäß Fig. 1 überein. Ein Unterschied besteht nur insofern, als das Verkleidungsteil 5c mit seinem dachseitigen Rand 15c auf einem umlaufenden, dachseitig angeordneten Absatz 16c des Stützfuß-Innenteiles 4c aufliegt. Ferner übergreift das Trageelement 2c einen schaftförmigen Vorsprung 17c des Stützfuß-Innenteiles 4c und ist dort z.B. mit Hilfe einer Schraube 18c gesichert.

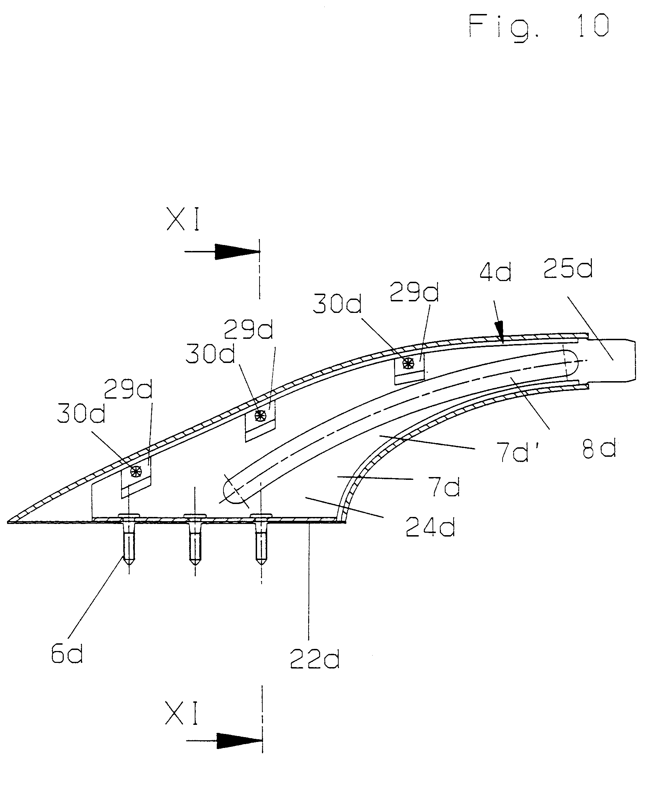

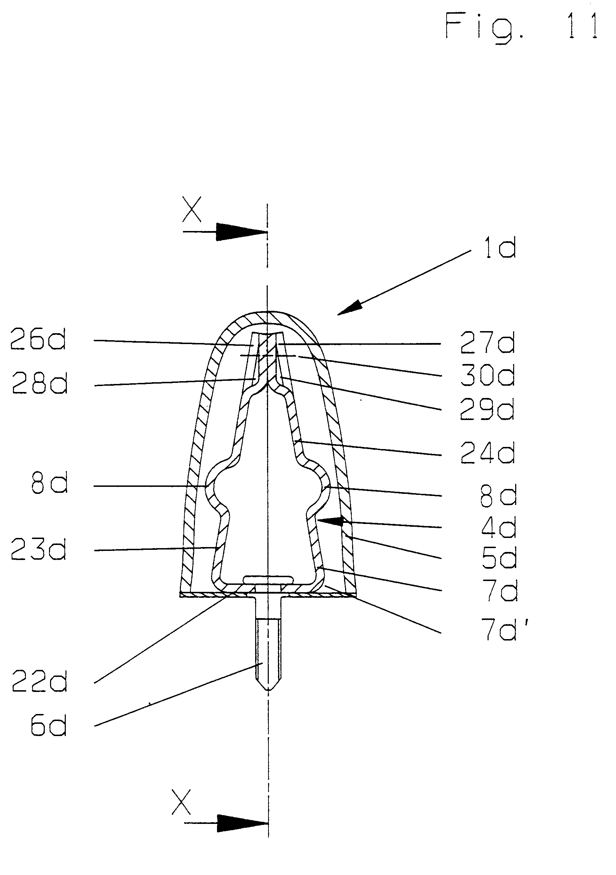

Ein letztes Ausführungsbeispiel ist in den Figuren 10 und 11 dargestellt, wobei für gleiche Teile ebenfalls dieselben Bezugszahlen und zusätzlich der Buchstabenindex d verwendet sind.

Der Stützfuß 1d umfaßt ein Stützfuß-Innenteil 4d und ein Verkleidungsteil 5d, wobei das als Mittelteil 7d ausgebildete Stützfuß-Innenteil 4d ein Hohlträger 7d' ist und Vorsprünge 8d in Gestalt von Versteifungssicken aufweist. Sie sind nach außen gewölbt, wie Fig. 11 zeigt.

Jedes Mittelteil 7d bzw. jeder Hohlträger 7d' umfaßt einen Boden 22d und Seitenwände 23d bzw. 24d, in denen die zur Versteifung dienenden Vorsprünge 8d angeordnet sind und sich vom Boden 22d bis zu einem schaftförmigen Vorsprung 25d an dem den Boden 22d abgewandten Ende des Mittelteiles 7d erstrecken. Der schaftförmige Vorsprung 25d dient zum Aufstecken eines in den Figuren 10 und 11 nicht dargegestellten, stangenförmigen Trageelementes.

Die Seitenwände 23d und 24d erstrecken sich vom Boden 22d zu ihren freien Rändern 26d und 27d hin konvergierend aufeinanderzu. Ferner befinden sich Einprägungen 28d und 29d vorzugsweise im Bereich der freien Ränder 26d und 27d der Seitenwände 23d und 24d und berühren sich vorzugsweise, wie dies ebenfalls in Fig. 11 dargestellt ist.

Die Einprägungen 28d und 29d dienen einerseits ebenfalls zur Versteifung des Hohlträgers 7d' und andererseits liegen sie vorzugsweise plan aufeinander, so daß die Seitenwände 23d und 24d im Bereich der Einprägungen 28d und 29d aneinander befestigt werden können. Hierzu können Schrauben 30d verwendet werden oder die Ränder 26d und 27d der Seitenwände 23d und 24d werden miteinander verschweißt oder durch eine Falzverbindung aneinander befestigt.

Der Hohlträger 7d' ist vorzugsweise ein einstückig geformtes Blechstanzteil bzw. ein profiliertes Blechformteil, das ein länglicher Hohlkörper ist und sich im Inneren des Verkleidungsteiles 5d befindet. Befestigungselemente bzw. Schrauben 6d dienen wiederum zum Befestigen des Stützfußes 1d an einem Dach eines Kraftfahrzeuges oder dergleichen.

Die verschiedenen Ausführungsbeispiele zeigen, daß die Erfindung in mannigfacher Weise abgewandelt und mit verschiedenen Modifikationen versehen werden kann, ohne daß es erforderlich ist, von dem Grundgedanken abzuweichen. Die Verwendung der verschiedenen Stützfüße 1 bzw. 1a - 1d ist darüberhinaus nicht auf Dachlastträger beschränkt, vielmehr können sie auch in Verbindung mit einer beliebigen Dachreling eingesetzt werden.

## Patentansprüche

1. Dachlastträger mit mehrteiligen Stützfüßen (1 und 1a - 1d) und mit mindestens einem Trageelement (2, 2c), wobei die Stützfüße (1, 1a- 1d) aus je mindestens einem Stützfuß-Innenteil (4, 4a- 4d) und einem Verkleidungsteil (5, 5c, 5d) bestehen und ferner das jeweilige Stützfuß-Innenteil (4, 4a - 4d) mit Befestigungselementen (6, 6d) zum Befestigen am Dach eines Kraftfahrzeuges versehen ist, dadurch gekennzeichnet, daß das Stützfuß-Innenteil (4, 4a- 4d) ein tragendes Mittelteil (7, 7a, 7b, 7d) umfasst und daß versteifende Vorsprünge (8, 8a, 8d) außen auf dem tragenden Mittelteil (7, 7a, 7b, 7d) angeordnet sind.

2. Dachlastträger nach Anspruch 1, dadurch gekennzeichnet, daß die versteifenden Vorsprünge (8, 8a, 8b, 8d) beidseitig außen auf dem tragenden Mittelteil (7, 7a, 7b, 7d) angeordnet sind.

3. Dachlastträger nach einem oder mehreren der vorhergehenden Ansprüche, dadurch gekennzeichnet, daß das Mittelteil (7a) eine sich zumindest über einen Teil seiner Länge erstreckende Hohlkammer (12a) aufweist.

4. Dachlastträger nach einem oder mehreren der vorhergehenden Ansprüche, dadurch gekennzeichnet, daß die Hohlkammer (12a) einen runden Querschnitt aufweist.

5. Dachlastträger nach einem oder mehreren der vorhergehenden Ansprüche, dadurch gekennzeichnet, daß mindestens ein metallisches Versteifungselement (13b) zusätzlich vorgesehen ist.

6. Dachlastträger nach einem oder mehreren der vorhergehenden Ansprüche, dadurch gekennzeichnet, daß mindestens ein metallisches Versteifungselement (13b) zusätzlich in Inneren des Mittelteiles (7b) angeordnet ist.

7. Dachlastträger nach einem oder mehreren der vorhergehenden Ansprüche, dadurch gekennzeichnet, daß das Versteifungselement (13b) plattenförmig ist und Versteifungssicken (14b) aufweist.

8. Dachlastträger nach einem oder mehreren der vorhergehenden Ansprüche dadurch gekennzeichnet, daß das Verkleidungsteil (5 ) dickwandig ist.

9. Dachlastträger nach einem oder mehreren der vorhergehenden Ansprüche, dadurch gekennzeichnet, daß das Verkleidungsteil (5) ein Körper aus hochsteifem, glasfaserverstärktem Kunststoff ist.

10. Dachlastträger nach einem oder mehreren der vorhergehenden Ansprüche, dadurch gekennzeichnet, daß die versteifenden Vorsprünge (8) außen am Mitteilteil (7, 7a, 7b) fachwerkartig und/oder wabenartig angeordnet sind.

11. Dachlastträger nach einem oder mehreren der vorhergehenden Ansprüche, dadurch gekennzeichnet, daß das Mittelteil (7) plattenförmig ist und/oder aus stegförmigen Teilen (1o) besteht.

12. Dachlastträger nach einem oder mehreren der vorhergehenden Ansprüche, dadurch gekennzeichnet, daß das Stützfuß-Innenteil (4) aus Metallguß besteht.

13. Dachlastträger nach einem oder mehreren der vorhergehenden Ansprüche, dadurch gekennzeichnet, daß das Mittelteil (7) aus einem hochsteifen, glasfaserverstärkten Kunststoff besteht.

14. Dachlastträger nach einem oder mehreren der vorhergehenden Ansprüche, dadurch gekennzeichnet, daß das Verkleidungsteil (5) ein gesondert gefertigter, das Stützfuß-Innenteil (4) formschlüssig und/oder schalenförmig umgebender Körper ist.

15. Dachlastträger nach einem oder mehreren der vorhergehenden Ansprüche, gekennzeichnet durch seine Verwendung als Dachreling.

16. Dachlastträger nach einem oder mehreren der vorhergehenden Ansprüche, dadurch gekennzeichnet, daß das Mittelteil (7d) ein Hohlträger (7d') mit Vorsprüngen (8d) in Gestalt von Versteifungssicken ist.

17. Dachlastträger nach einem oder mehreren der vorhergehenden Ansprüche, dadurch gekennzeichnet, daß der Hohlträger (7d') einen Boden (22d) und Seitenwände (23d, 24d) aufweist, in denen die Vorsprünge (8d) sowie Einprägungen (28d, 29d) angeordnet sind.

18. Dachlastträger nach einem oder mehreren der vorhergehenden Ansprüche, dadurch gekennzeichnet, daß die Einprägungen (28d, 29d) an den freien Rändern (26d, 27d) der sich vom Boden (22d) konvergierend aufeinanderzu erstreckenden Seitenwände (23d, 24d) angeordnet sind.

19. Dachlastträger nach einem oder mehreren der vorhergehenden Ansprüche, dadurch gekennzeichnet, daß die Einprägungen (28d, 29d) in den Seitenwänden (23d, 24d) plan aufeinanderliegen und daß die Seitenwände (23d, 24d) im Bereich ihrer dem Boden (22d) abgewandten Ränder (26d, 27d) zumindest teilweise aneinander befestigt sind.

20. Dachlasträger nach einem oder mehreren der vorhergehenden Ansprüche, dadurch gekennzeichnet, daß der Hohlträger (7d') ein einstückig geformtes Blechstanzteil ist, dessen freie Ränder (26d, 27d) zumindest teilweise miteinander verbunden sind.

## Claims

1. A roof rack with multi-part support legs (1 and 1a - 1d) and at least one carrier element (2, 2c), wherein the support legs (1, 1a - 1d) each comprise at least one inner support leg portion (4, 4a - 4d) and a cladding portion (5, 5c, 5d) and in addition the respective inner support leg portion (4, 4a - 4d) is provided with fixing elements (6, 6d) for fixing to the roof of a motor vehicle, characterised in that the inner support leg portion (4, 4a - 4d) includes a load-bearing central portion (7, 7a, 7b, 7d) and that stiffening projections (8, 8a, 8d) are arranged externally on the load-bearing central portion (7, 7a, 7b, 7d).

2. A roof rack according to claim 1 characterized in that the stiffening projections (8, 8a, 8b, 8d) are externally arranged on both sides on the load-bearing central portion (7, 7a, 7b, 7d).

3. A roof rack according to one or more of the preceding claims characterised in that the central portion (7a) has a hollow chamber (12a) extending at least over a part of its length.

4. A roof rack according to one or more of the preceding claims characterised in that the hollow chamber (12a) is of a round cross-section.

5. A roof rack according to one or more of the preceding claims characterised in that there is additionally provided at least one metallic stiffening element (13b).

6. A roof rack according to one or more of the preceding claims characterised in that at least one metallic stiffening element (13b) is additionally arranged in the interior of the central portion (7b).

7. A roof rack according to one or more of the preceding claims characterised in that the stiffening element (13) is of a plate-like configuration and has stiffening beads (14b).

8. A roof rack according to one or more of the preceding claims characterised in that the cladding portion (5) is of thick gauge.

9. A roof rack according to one or more of the preceding claims characterised in that the cladding portion (5) is a body of highly stiff, glass fibre-reinforced plastics material.

10. A roof rack according to one or more of the preceding claims characterised in that the stiffening projections (8) are arranged externally on the central portion (7, 7a, 7b) in a lattice-like and/or honeycomb-like configuration.

11. A roof rack according to one or more of the preceding claims characterised in that the central portion (7) is of a plate-like configuration and/or comprises web-like parts (10).

12. A roof rack according to one or more of the preceding claims characterised in that the inner support leg portion (4) comprises cast metal.

13. A roof rack according to one or more of the preceding claims characterised in that the central portion (7) comprises a highly stiff, glass fibre-reinforced plastics material.

14. A roof rack according to one or more of the preceding claims characterised in that the cladding portion (5) is a separately produced body which encloses the inner support leg portion (4) in positively locking relationship and/or in a shell-like manner.

15. A roof rack according to one or more of the preceding claims characterised by use thereof as a roof rail.

16. A roof rack according to one or more of the preceding claims characterised in that the central portion (7d) is a hollow bearer (7d') with projections (8d) in the form of stiffening beads.

17. A roof rack according to one or more of the preceding claims characterised in that the hollow bearer (7d') has a bottom (22d) and side walls (23d, 24d) in which the projections (8d) and impression portions (28d, 29d) are arranged.

18. A roof rack according to one or more of the preceding claims characterised in that the impression portions (28d, 29d) are arranged at the free edges (26d, 27d) of the side walls (23d, 24d) which extend in mutually convergent relationship from the bottom (22d).

19. A roof rack according to one or more of the preceding claims characterised in that the impression portions (28d, 29d) in the side walls (23d, 24d) lie flat against each other and that the side walls (23d, 24d) are at least partially fixed to each other in the region of their edges (26d, 27d) remote from the bottom (22d).

20. A roof rack according to one or more of the preceding claims characterised in that the hollow bearer (7d') is an integrally shaped stamped sheet metal portion whose free edges (26d, 27d) are at least partially connected together.

## Revendications

1. Galerie de toit comprenant des pieds de support (1 et 1a - 1d), en plusieurs parties, et au moins un élément porteur (2, 2c), les pieds de support (1, 1a - 1d) se composant d'au moins une partie interne de pied de support (4, 4a - 4d) et d'une partie de garniture (5, 5c, 5d) et en outre, la partie interne respective de pied de support (4, 4a - 4d) étant munie d'éléments de fixation (6, 6d) pour la fixation sur le toit d'une automobile, caractérisée en ce que la partie interne de pied de support (4, 4a - 4d) comprend une partie médiane porteuse (7, 7a, 7b, 7d) et en ce que les saillies formant raidisseurs (8, 8a, 8d) sont disposées à l'extérieur sur la partie médiane porteuse (7, 7a, 7b, 7d).

2. Galerie de toit selon la revendication 1, caractérisée en ce que les saillies formant raidisseurs (8, 8a, 8b, 8d) sont disposées des deux côtés à l'extérieur de la partie médiane porteuse (7, 7a, 7b, 7d).

3. Galerie selon l'une ou plusieurs des revendications précédentes, caractérisée en ce que la partie médiane (7a) présente une cavité creuse (12a) qui s'étend au moins sur une partie de sa longueur.

4. Galerie selon l'une ou plusieurs des revendications précédentes, caractérisée en ce que la cavité creuse (12a) présente une section transversale ronde.

5. Galerie selon l'une ou plusieurs des revendications précédentes, caractérisée en ce qu'il est au moins prévu, en supplément, un élément raidisseur métallique (13b).

6. Galerie selon l'une ou plusieurs des revendications précédentes, caractérisée en ce qu'au moins un élément raidisseur (13b) supplémentaire est disposé à l'intérieur de la partie médiane (7b).

7. Galerie selon l'une ou plusieurs des revendications précédentes, caractérisée en ce que l'élément raidisseur (13b) forme une plaque et présente des moulures de raidissement (14b).

8. Galerie selon l'une ou plusieurs des revendications précédentes, caractérisée en ce que la partie d'habillage (5) présente des parois épaisses.

9. Galerie selon l'une ou plusieurs des revendications précédentes, caractérisée en ce que la partie de garniture (5) est constituée par un corps en matière plastique hautement rigide et renforcée par des fibres de verre.

10. Galerie selon l'une ou plusieurs des revendications précédentes, caractérisée en ce que les saillies formant raidisseur (8) sont disposées sur la partie médiane (7, 7a, 7b) à la manière d'un treillis ou en nid d'abeilles.

11. Galerie selon l'une ou plusieurs des revendications précédentes, caractérisée en ce que la partie médiane (7) est en forme de plaque et/ou se compose de parties (10) en forme de traverse.

12. Galerie selon l'une ou plusieurs des revendications précédentes, caractérisée en ce que la partie interne de pied de support (4) est en métal coulé.

13. Galerie selon l'une ou plusieurs des revendications précédentes, caractérisée en ce que la partie médiane (7) se compose d'une matière plastique hautement rigide, renforcée par des fibres de verre.

14. Galerie selon l'une ou plusieurs des revendications précédentes, caractérisée en ce que la partie de garniture (5) est un corps fabriqué séparément, et entourant la partie interne de pied de support (4) par adhérence des formes et/ou à la manière d'une coque.

15. Galerie selon l'une ou plusieurs des revendications précédentes, caractérisée par son utilisation en tant que rambarde de toit.

16. Galerie selon l'une ou plusieurs des revendications précédentes, caractérisée en ce que la partie médiane (7d) est constituée par une galerie creuse (7d') comprenant des saillies (8d) formant des moulures de raidissement.

17. Galerie selon l'une ou plusieurs des revendications précédentes, caractérisée en ce que la galerie creuse (7d') présente un fond (22d) et des parois latérales (23d, 24d) dans lesquelles sont disposées les saillies (8d) et les empreintes (28d, 29d).

18. Galerie selon l'une ou plusieurs des revendications précédentes, caractérisée en ce que les empreintes (28d, 29d) sont disposées sur les bords libres (26d, 27d) des parois latérales (23d, 24d) s'étendant l'une sur l'autre de manière convergente en partant du fond (22d).

19. Galerie selon l'une ou plusieurs des revendications précédentes, caractérisée en ce que les empreintes (28d, 29d) sont placées les unes au-dessus des autres de manière plane dans les parois latérales (23d, 24d) et en ce que les parois latérales (23d, 24d) sont fixées du moins partiellement l'une à l'autre dans la zone de leurs bords (26d, 27d) détournés du fond (22d).

20. Galerie selon l'une ou plusieurs des revendications précédentes, caractérisée en ce que la galerie creuse (7d') est une pièce de tôle estampée moulée d'une seule pièce dont les bords libres (26d, 27d) sont reliés du moins partiellement entre eux.
